# FASCICULE DE BREVET EUROPEEN

(11) **EP 0 668 177 B1**
(45) Date de publication et mention de la délivrance du brevet: **17.09.1997**
(21) Numéro de dépôt: 95101903.3
(22) Date de dépôt: 13.02.1995
(51) Int. Cl.: B60H 1/00

(54) **Dispositif de commande d'un système de climatisation pour véhicule**
Bedienungsvorrichtung für die Klimaanlage eines Kraftfahrzeuges
Control device for a motor vehicle air-conditioning system

(30) Priorité: 22.02.1994 FR 9401981
(43) Date de publication de la demande: 23.08.1995
(73) Titulaire: SMH Management Services AG, CH-2501 Biel (CH)
(72) Inventeur: Chevroulet, Tristan, Norwich NR3 4BH (GB); Piccolo, Jian A., CH-2300 La Chaux-de-Fonds (CH)
(74) Mandataire: Patry, Didier Marcel Pierre

(56) Documents cités:
- EP-A- 0 214 605
- EP-A- 0 558 412
- DE-A- 3 135 909
- FR-A- 990 800
- FR-A- 2 629 022
- PATENT ABSTRACTS OF JAPAN vol. 7, no. 271 (M-260) (1416) 3 Décembre 1983 & JP-A-58 149 818 (DIESEL KIKI) 6 Septembre 1983

## Description

La présente invention est relative à un dispositif de commande d'un système de climatisation pour véhicule.

Les systèmes de climatisation pour véhicules sont nombreux et variés. La plupart d'entre eux utilisent, pour le chauffage, la chaleur dégagée par certains éléments du véhicule dont on veut éviter que la température s'élève exagérément. Dans le cas d'un véhicule à moteur thermique, c'est la chaleur dégagée par le moteur, qui est surabondante, qui sera utilisée. Dans un véhicule à moteur électrique, on pourra utiliser, outre la chaleur relativement faible produite par le moteur, celle qui est dégagée par l'électronique de puissance, la chaleur dégagée par le freinage et, si nécessaire, celle qui est fournie par un radiateur électrique d'appoint.

Pour abaisser la température de l'habitacle, il est nécessaire de prévoir un réfrigérant, par exemple sous la forme d'un évaporateur d'un circuit à fluide caloporteur. Lorsque la climatisation fonctionne pour abaisser la température, il est nécessaire que les moyens de chauffage soient écartés du circuit d'air de climatisation. S'il s'agit d'un échangeur liquide-air ou d'un radiateur électrique d'appoint, il suffit, en principe, d'actionner une vanne à liquide ou commutateur électrique. De tels vannes ou commutateurs sont cependant plus coûteux, à efficacité et fiabilité égales, que des vannes commandant une circulation d'air. De plus, la régulation par l'utilisateur est compliquée à cause de l'inertie thermique du liquide.

On notera aussi que, lorsque le chauffage de l'habitacle est arrêté, il faut prévoir le refroidissement par d'autres moyens, tels que des ventilateurs, des éléments de véhicule dont la température ne doit pas s'élever exagérément.

On conçoit donc que l'ensemble du contrôle des températures des diverses parties d'un véhicule, à l'intérieur et à l'extérieur de l'habitacle, aboutit à des installations très complexes.

Le but de l'invention est de fournir un dispositif de commande de climatisation qui soit compact et économique, tout en assurant une simplification de l'ensemble des moyens pour contrôler la température de différents éléments du véhicule.

Pour obtenir ce résultat, l'invention fournit un dispositif de commande d'un système de climatisation pour véhicule, ce système comprenant un circuit pour introduire de l'air dans l'habitacle, après l'avoir fait passer dans des moyens de chauffage et/ou de refroidissement, le circuit comprenant un ventilateur, une vanne commandant l'évacuation de l'air vers l'extérieur et une vanne commandant l'admission d'air frais, au moins une vanne pour commander la température de l'air admis dans l'habitacle, et un répartiteur qui détermine si cet air est introduit en étant soufflé vers la partie haute, médiane ou basse de l'habitacle, la particularité de ce dispositif étant qu'il comprend, groupés en un seul appareil qui peut être mis en place et enlevé d'un seul bloc :
- un ventilateur,
- un premier conduit, relié à la sortie du ventilateur, contenant au moins un organe dégageant de la chaleur, et pourvu d'une vanne pour l'évacuation d'air, cette vanne étant située en aval, dans le sens de circulation de l'air dudit organe dégageant de la chaleur,
- un second conduit disposé en parallèle au premier, et pourvu d'une vanne susceptible de l'obturer,
- un répartiteur commun disposé à la sortie des deux conduits et apte à diriger l'air sortant des premier et second conduits vers l'habitacle.

Si la vanne du premier conduit est en position de fermeture vers l'extérieur, la chaleur dégagée par l'organe chauffant sera dirigée vers l'habitacle, ou elle parviendra sous forme d'air chaud à plus ou moins haute température selon la position de la vanne du second conduit.

Si la vanne du premier conduit est en position d'ouverture vers l'extérieur, la chaleur dégagée par l'organe chauffant sera dirigée vers l'extérieur, et l'habitacle sera isolé de l'extérieur si la vanne du second conduit est fermée, et il recevra de l'air frais si la vanne du second conduit est ouverte.

Ainsi, le dispositif de l'invention remplit une double fonction : 1) contrôler l'aération de l'habitacle, soit en lui envoyant de l'air chaud, soit en lui envoyant de l'air frais, soit en l'isolant, et 2) refroidir en permanence un organe chauffant. Celui-ci, par exemple, peut être constitué par l'électronique de puissance d'un véhicule électrique. Il peut aussi comprendre un échangeur destiné à évacuer la chaleur récupérée lors du freinage.

Un réfrigérant, qui peut être un évaporateur de système fonctionnant selon le principe de la pompe à chaleur, peut être disposé dans le second conduit. De tels appareils étant souvent volumineux, il est préférable de le placer entre la sortie des deux conduits et le répartiteur commun. Il peut ainsi occuper toute la largeur du dispositif.

De même, un filtre, qui est souvent un organe encombrant, sera également placé entre la sortie des deux conduits et le répartiteur commun. Avantageusement, il sera placé en amont, dans le sens de la circulation d'air, du réfrigérant, pour limiter les risques d'encrassement de celui-ci et homogénéiser le flux d'air.

Cela permet aussi d'éviter que des gouttelettes provenant de la condensation à la surface de l'évaporateur n'entrent en contact avec les éléments situés en amont du filtre, par exemple un chauffage électrique.

Suivant une réalisation intéressante, le dispositif comprend en outre un radiateur d'appoint situé dans le premier conduit, en aval de la vanne du premier conduit.

Cette disposition particulière correspond au fait que, par nature, le radiateur d'appoint n'entre en fonction que lorsqu'on manque de chaleur, c'est-à-dire dans une situation où la vanne du premier conduit est fermée vers l'extérieur. Il est préférable que ce radiateur soit hors du circuit d'air lorsque le dispositif n'est pas utilisé à chauffer l'habitacle.

Avantageusement, les vannes des deux conduits sont couplées de telle sorte que, lorsque la vanne du premier conduit est fermée vers l'extérieur, la vanne du second conduit est en position d'obturation.

Cette disposition présente pour avantage que, lorsqu'on chauffe l'habitacle à l'aide des sources de chaleur du premier conduit, on évite une consommation d'énergie inutile et une source de bruit au niveau du ventilateur en évitant de faire passer de l'air dans le second conduit. En sens inverse, au contraire, il peut être avantageux de pouvoir isoler momentanément l'habitacle du flux d'air traversant les organes dégageant de la chaleur en ouvrant la vanne du premier conduit vers l'extérieur.

L'invention va maintenant être expliquée de façon plus détaillée à l'aide d'un exemple pratique, illustré avec les dessins parmi lesquels :
Figure 1 est une vue d'ensemble de la climatisation de la cabine d'un véhicule électrique équipée d'un dispositif conforme à l'invention, et
Figure 2 est une vue en perspective du dispositif lui-même, un panneau latéral ayant été enlevé pour plus de clarté, avec arrachement partiel.

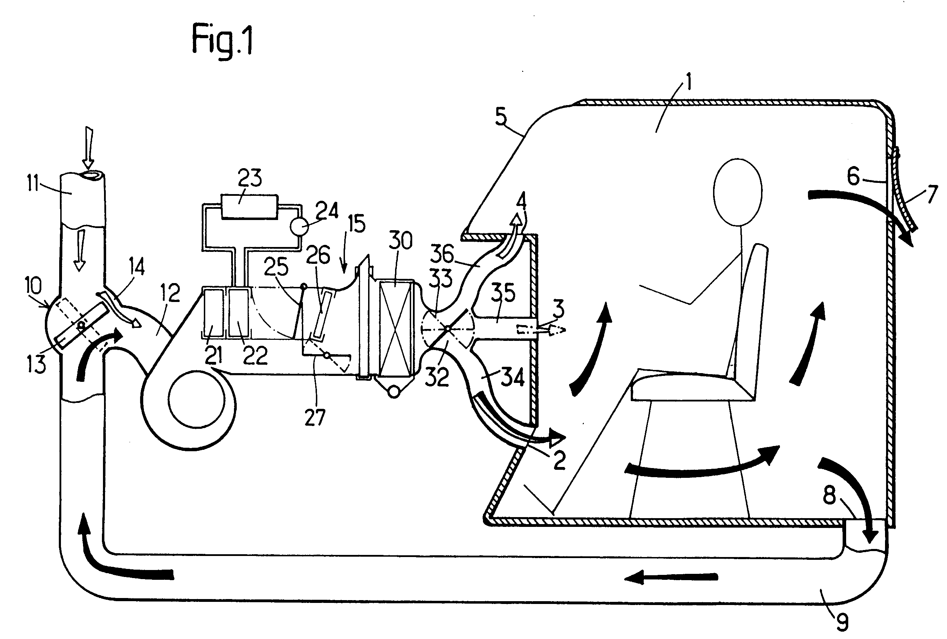

La figure 1 montre la cabine de conduite 1 d'un véhicule, représentée comme une cabine de camion. La cabine 1 peut recevoir de l'air par une bouche d'aération 2, dirigée vers la partie basse de la cabine, en gros vers les pieds du conducteur, par une autre bouche d'aération 3, qui envoie de l'air dans la partie médiane de la cabine, et par une bouche 4 qui envoie de l'air pour le dégivrage du pare-brise 5 du véhicule. Bien entendu, ces bouches peuvent avoir chacune plusieurs orifices.

L'air peut sortir de la cabine par une ouverture 6 débouchant vers l'extérieur et munie d'un clapet d'obturation 7 s'opposant à une rentrée d'air par cette ouverture 6, et par une sortie 8 reliée à un conduit de recyclage d'air 9. Le conduit 9 conduit l'air à une vanne à trois voies 10, qui est par ailleurs reliée à un conduit d'admission d'air frais 11, et un conduit 12 destiné à envoyer de l'air vers la cabine 1. La vanne à trois voies 10 est munie d'un volet 13, qui peut occuper une première position, représentée en trait plein sur la figure, dans laquelle l'air venant du conduit de recyclage 9 est envoyé vers la cabine. Une conduite de dérivation 14 permet, dans ce cas, une admission partielle d'air frais dans le conduit 12. Le volet 13 peut occuper une deuxième position, en tirets sur la figure, dans laquelle le conduit 9 est fermé, et la cabine est alors alimentée uniquement en air frais. Le volet 13 peut également occuper des positions intermédiaires.

Le véhicule peut être dépourvu de conduit de recyclage 9. Dans ce cas, le conduit 12 est alimenté uniquement en air frais.

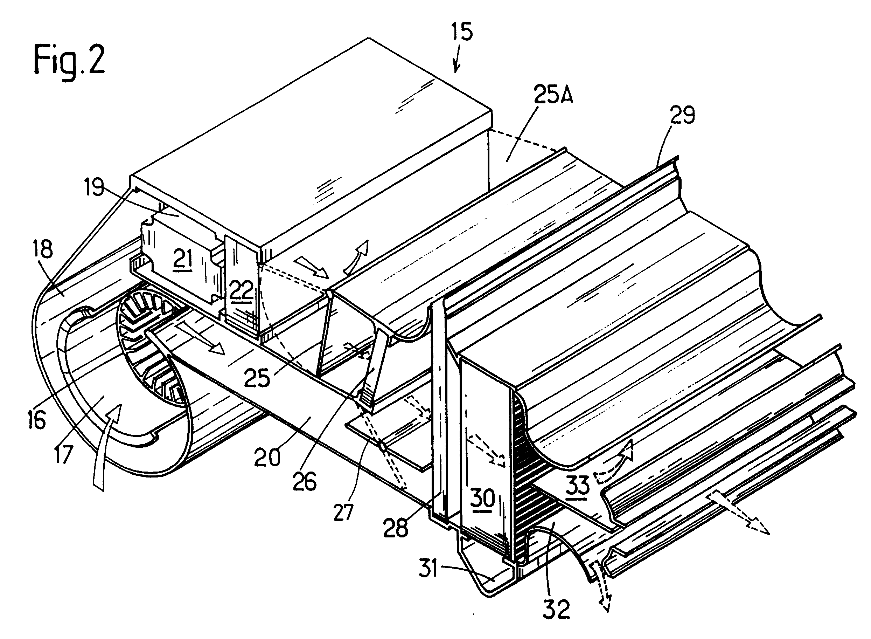

Entre le conduit 12 et les bouches d'aération 2, 3 et 4, est intercalé un dispositif selon l'invention, qui sera décrit de façon plus détaillée à l'aide de la figure 2. Le dispositif de climatisation, désigné dans son ensemble par la référence 15, comprend une turbine centrifuge 16, dont l'admission 17 est reliée au conduit 12, et la sortie 18 est reliée à deux conduits en parallèle : un conduit "chaud" 19 et un conduit "frais" 20. Dans le conduit "chaud" 19 est intercalé d'abord un ensemble 21 qui comprend l'électronique de puissance qui commande le moteur électrique (non représenté) du véhicule. On sait que cette électronique dissipe quelques centaines de watts. L'écoulement d'air, après avoir refroidi les organes électroniques contenus dans le châssis 21, traverse un échangeur eau-air 22. Cet échangeur reçoit de l'eau chaude provenant d'un circuit d'évacuation de l'énergie de freinage. Ce circuit comprend un organe de chauffage 23, constitué d'un récipient dans lequel sont immergées des résistances chauffantes, reliées au moteur du véhicule, et qui reçoivent l'électricité produite par ce moteur lors du freinage. Dans le récipient 23, l'énergie des résistances chauffantes est transmise à l'eau, qui circule entre ce récipient et l'échangeur 22, grâce à une pompe 24, voir figure 1.

En aval de l'échangeur 22 est disposé un volet mobile 25. Ce volet mobile peut occuper une première position, représentée en trait plein sur la figure, dans laquelle le courant d'air qui s'est échauffé au contact du châssis 21 et de l'échangeur 22 est empêché de continuer en direction de la cabine du véhicule, et sort vers l'extérieur à travers une ouverture de la paroi du dispositif. Dans une autre position, représentée en tirets, le volet 25 ferme l'ouverture 25A, et dirige l'air échauffé vers la cabine. Quand le volet 25 est dans cette position, l'air chaud traverse un radiateur électrique d'appoint 26. Il rejoint ensuite le conduit "frais" 20.

Le conduit "frais" 20 conduit directement l'air depuis la sortie 18 du ventilateur, jusqu'au point où la sortie des conduits chauds 19 et frais 20 se rejoignent. A cet endroit, un volet rotatif 27 est monté pour occuper une première position, où il permet à l'air frais venant du conduit 20 de continuer sa route, et une deuxième position, représentée en tirets, où le conduit 20 est obturé. Le volet 27 est disposé de façon à ne pas obturer la sortie du conduit chaud 19. On notera à ce propos que le volet 27 est couplé au volet 25 de sorte que ce dernier est obturé lorsque le volet 27 permet à l'air de passer. On notera également qu'entre les deux positions extrêmes respectives des volets 25 et 27, ces derniers peuvent occuper des positions intermédiaires (non représentées).

Au-delà du volet 27, un filtre 28 est disposé en travers du dispositif. Le filtre 28 est disposé en travers du dispositif. Le filtre 28 peut être traversé par l'air provenant aussi bien du conduit chaud 19 que du conduit frais 20. Il est disposé de façon à être amovible, grâce au fait que son bord supérieur 29 est conformé pour constituer un organe de prise. Au-delà du filtre 28, se trouve un évaporateur 30, dans lequel est envoyé un fluide réfrigérant à l'état liquide, ce fluide refroidit l'air chaud en se vaporisant par dépression, selon une technique bien connue de l'homme du métier. Bien entendu, l'évaporateur 30 n'est pas alimenté lorsqu'on désire élever la température de la cabine. Une gouttière 31 est prévue sous l'évaporateur 30, de façon à récupérer l'eau de condensation qui se forme par refroidissement de l'air. L'eau récupérée dans la gouttière 31 est ensuite évacuée à l'extérieur.

La sortie de l'évaporateur 30 est reliée à une chambre de distribution 32, équipée d'un volet répartiteur 33. Ce volet répartiteur 33 permet d'envoyer à volonté l'air frais vers les bouches d'aération 2, 3 ou 4 par l'intermédiaire de conduits 34, 35 et 36, ainsi qu'on peut le voir à la figure 1.

L'ensemble des éléments du dispositif de climatisation est enfermé dans un carter par exemple en matière plastique tel qu'un polypropylène chargé de particules de talc. A la figure 2, le dispositif est montré avec une paroi latérale supposée enlevée, dans un but de clarté. L'ensemble du dispositif constitue ainsi un bloc amovible, facile à monter et à démonter.

## Revendications

1. Dispositif de commande d'un système de climatisation pour véhicule, ce système comprenant un circuit pour introduire de l'air dans l'habitacle, après l'avoir fait passer dans des moyens de chauffage et/ou de refroidissement, le circuit comprenant un ventilateur (16), une vanne commandant l'évacuation de l'air vers l'extérieur et une vanne commandant l'admission d'air frais, et au moins une vanne pour commander la température de l'air admis dans l'habitacle, et l'orifice par lequel cet air est introduit en étant soufflé vers la partie haute ou la partie basse de l'habitacle,
caractérisé en ce qu'il comprend, groupés en un seul appareil qui peut être mis en place et enlevé d'un seul bloc :
- un ventilateur (16),
- un premier conduit (19), relié à la sortie du ventilateur, contenant au moins un organe dégageant de la chaleur (21, 22), et pourvu d'une vanne (25) pour l'évacuation d'air vers l'extérieur du véhicule, cette vanne étant située en aval, dans le sens de circulation de l'air, dudit organe dégageant de la chaleur,
- un second conduit (20) disposé en parallèle au premier, et pourvu d'une vanne (27) susceptible de l'obturer,
- un répartiteur commun (32, 33) disposé à la sortie des deux conduits et apte à diriger l'air sortant des premier et second conduits vers l'habitacle.

2. Dispositif selon la revendication 1, caractérisé en ce qu'un réfrigérant (30) est placé entre la sortie des deux conduits et le répartiteur commun.

3. Dispositif selon la revendication 1 ou 2, caractérisé en ce qu'un filtre (28) est placé entre la sortie des deux conduits et le répartiteur commun.

4. Dispositif selon la revendication 3, caractérisé en ce que le filtre (28) est placé en amont, dans le sens de la circulation d'air, du réfrigérant (30).

5. Dispositif selon l'une des revendications 1 à 4, et destiné à un véhicule électrique, caractérisé en ce que l'organe dégageant de la chaleur (21) comprend l'électronique de puissance de moteurs électriques ou un échangeur de chaleur dégageant la chaleur de ladite électronique de puissance.

6. Dispositif selon l'une des revendications 1 à 5, et destiné à un véhicule électrique, caractérisé en ce que l'organe dégageant de la chaleur comprend un échangeur (22) destiné à évacuer la chaleur récupérée lors du freinage ou l'organe lui-même.

7. Dispositif selon l'une des revendications 1 à 6, caractérisé en ce qu'il comprend en outre un radiateur d'appoint (26) situé dans le premier conduit, en aval de la vanne du premier conduit.

8. Dispositif selon l'une des revendications 1 à 7, caractérisé en ce que les vannes (25, 27) des deux conduits (19, 20) sont couplées de telle sorte que, lorsque la vanne du premier conduit est fermée vers l'extérieur, la vanne du second conduit est en position d'obturation.

## Claims

1. Vehicle air-conditioning system control device, this system comprising a circuit for introducing air into a passenger space, after having passed it through heating and/or cooling means, the circuit comprising a fan (16), a valve controlling the discharge of air to the exterior and a valve controlling the admission of fresh air, and at least one valve to control the temperature of the air admitted into the passenger space, and a distributer which determines whether this air is introduced by being blown towards the upper or lower part of the passenger space,
characterized in that it includes, grouped together in a single apparatus, which may be installed and removed in a single piece:
- a fan (16)
- a first conduit (19), connected to the outlet of the fan, containing at least one heat releasing component (21, 22), and provided with a valve (25) for discharging air, this valve being situated downstream, in the direction of the flow of air, from said heat releasing component,
- a second conduit (20) placed parallel to the first, and provided with a valve (27) capable of obturating it,
- a common distributer (32, 33) placed at the outlet of the two conduits and being able to direct the air coming out of the first and second conduits towards the passenger space.

2. Device according to claim 1, characterized in that a refrigerator (30) is placed between the outlet of the two conduits and the common distributer.

3. Device according to claim 1 or 2, characterized in that a filter (28) is placed between the outlet of the two conduits and the common distributer.

4. Device according to claim 3, characterized in that the filter (28) is placed upstream, in the direction of the flow of air, from the refrigerator (30).

5. Device according to one of claims 1 to 4, and intended for an electric vehicle, characterized in that the heat releasing component (21) comprises the electronic power circuits of electric motors or a heat exchanger releasing the heat of said electronic power circuits.

6. Device according to one of claims 1 to 5, and intended for an electric vehicle, characterized in that the heat releasing component comprises an exchanger (22) for discharging the heat recovered from the brakes when they are applied or from the component itself.

7. Device according to one of claims 1 to 6, characterized in that it also includes an auxiliary radiator (26) situated in the first conduit, downstream from the valve of the first conduit.

8. Device according to one of claims 1 to 7, characterized in that the valves (25, 27) of the two conduits (19, 20) are coupled in such a way that, when the valve of the first conduit is closed to the exterior, the valve of the second conduit is in an obturating position.

## Patentansprüche

1. Steuervorrichtung eines Klimatisierungssystems für ein Fahrzeug, welches System einen Kreislauf für das Einspeisen von Luft in den Innenraum umfaßt, nachdem sie Aufheiz- und/oder Abkühlmittel passiert hat, welcher Kreislauf einen Ventilator (16), ein den Austrag der Luft nach außen steuerndes Ventil und ein den Einlaß von Frischluft steuerndes Ventil sowie mindestens ein Ventil zum Steuern der in den Innenraum eingelassenen Luft umfaßt, sowie einen Auslaß, über welchen diese Luft eingespeist wird, indem sie in Richtung der oberen oder der unteren Innenraumpartie geblasen wird,
dadurch gekennzeichnet, daß sie, in einem einzigen Apparat gruppiert, der als einzelner Block plaziert und entfernt werden kann, umfaßt:
- einen Ventilator (16),
- eine erste mit dem Auslaß des Ventilators verbundene Leitung (19), die mindestens ein Wärme freisetzendes Organ (21, 22) enthält, und mit einem Ventil (25) für den Austrag von Luft nach außerhalb bezüglich des Fahrzeugs versehen ist, welches Ventil sich stromab in Richtung der Zirkulation der Luft, bezogen auf das Wärme freisetzende Organ, befindet,
- eine zweite, parallel zur ersten angeordnete Leitung (20), versehen mit einem Ventil (27), mittels dem sie absperrbar ist,
- einen gemeinsamen Verteiler (32, 33), der am Ausgang der beiden Leitungen angeordnet und ausgebildet ist, um die aus der ersten und der zweiten Leitung ausströmende Luft in Richtung des Innenraums zu richten.

2. Vorrichtung nach Anspruch 1, dadurch gekennzeichnet, daß ein Kühler (30) zwischen dem Auslaß der beiden Leitungen und dem gemeinsamen Verteiler plaziert ist.

3. Vorrichtung nach Anspruch 1 oder 2, dadurch gekennzeichnet, daß ein Filter (28) zwischen dem Auslaß der beiden Leitungen und dem gemeinsamen Verteiler plaziert ist.

4. Vorrichtung nach Anspruch 3, dadurch gekennzeichnet, daß der Filter (28) stromauf im Sinne der Luftzirkulation bezüglich des Kühlers (30) plaziert ist.

5. Vorrichtung nach einem der Ansprüche 1 bis 4 und für ein Elektrofahrzeug bestimmt, dadurch gekennzeichnet, daß das Wärme freisetzende Organ (21) die Leistungselektronik von Elektromotoren oder einen Wärmetauscher umfaßt, der die Wärme der Leistungselektronik freisetzt.

6. Vorrichtung nach einem der Ansprüche 1 bis 5 und für ein Elektrofahrzeug bestimmt, dadurch gekennzeichnet, daß das Wärme freisetzende Organ einen Wärmetauscher (22) umfaßt, der zum Abführen der Wärme, die beim Bremsen oder dem Organ selbst wiedergewonnen wurde, bestimmt ist.

7. Vorrichtung nach einem der Ansprüche 1 bis 6, dadurch gekennzeichnet, daß sie ferner einen Zusatzheizkörper (26) umfaßt, der in der ersten Leitung stromab des Ventils der ersten Leitung angeordnet ist.

8. Vorrichtung nach einem der Ansprüche 1 bis 7, dadurch gekennzeichnet, daß die Ventile (25, 27) der beiden Leitungen (19, 20) derart gekoppelt sind, daß beim Schließen des Ventils der ersten Leitung nach außen das Ventil der zweiten Leitung in Absperrposition ist.
